# EUROPEAN PATENT SPECIFICATION

(11) **EP 1 619 965 B1**
(45) Date of publication and mention of the grant of the patent: **06.04.2011**
(21) Application number: 04731095.8
(22) Date of filing: 04.05.2004
(51) Int. Cl.: A23L 1/236, A23L 1/05, A23L 1/308

(54) **EDULCORANT COMPOSITIONS**
SÜSSMITTELZUSAMMENSETZUNGEN
COMPOSITIONS EDULCORANTES

(30) Priority: 06.05.2003 IT MI20030907
(43) Date of publication of application: 01.02.2006
(73) Proprietor: F.A.S.T. Fiber and Strip Tease SAS di Alessandro Seneci & C., 20134 Milano (IT)
(72) Inventor: SENECI, Alessandro, I-20090 Segrate (IT)
(74) Representative: Pistolesi, Roberto
(86) International application number: PCT/IT2004/000242
(87) International publication number: WO 2004/098319

(56) References cited:
- EP-A- 1 010 374
- EP-A- 1 249 177
- WO-A-02/096219
- WO-A-2004/022074
- US-A1- 2002 054 953

## Description

The present invention refers to a new edulcorating composition for food and/or dietetic use in order to reduce the glycemic peak due to the swallowing of monosaccharides or disaccharides with a edulcorating effect; it is also able to bring soluble fibres with a prebiotic affect useful for the re-equilibrium and the feeding of the bacterial flora.

WO02/096219 discloses a controlled induced viscosity fiber system comprising an anionic soluble fibre source (a) and a water-insoluble multivalent cation that is ionisable in acid (b).

EP1249177 and US2002/0054954 disclose edulcorating composition containing a soluble fibre and a sweetener.

The composition according to the present invention contains 5 to 20% by weight of inulin or fructo oligosaccharides, 3 to 10% by weight of jellying fibre, 0.5 to 5% by weight of cellulose and 60 to 92.5% of monosaccharides or disaccharides, with respect to the whole weight of such composition (i.e. where the sum of the single components is 100).

The jellying fibre is selected preferably from glucomannano, guar gum, caraja gum or pectin; the monosaccharides are preferably selected from fructose and/or dextrose; the disaccharides are preferably selected from saccharose, lactose and/or maltose; the cellulose is preferably in a microcrystalline form.

According to a first preferred embodiment of the invention, the composition contains 7 to 18% by weight of inulin or oligosaccharides, preferably 10 to 16% by weight, more preferably about 15% by weight.

According to a second embodiment of the invention, the composition contains preferably 3.5 to 8% by weight, more preferably about 4% by weight of jellying fibres.

According to a third preferred embodiment of the invention, the composition contains 0.8 to 3% by weight of cellulose, preferably 1% by weight.

According to a last preferred embodiment, the composition contains 70 to 90% by weight of monosaccharides or disaccharides, preferably 75 to 85% by weight, more preferably about 80% by weight.

The edulcorating composition of the present invention can be prepared by simply mixing of the single components, by dry granulating (pre-compression) or by wet on a fluid bed, according to techniques well known in the art.

The object of the present invention is not limited to the edulcorating compositions above described but also to the use of the single components, in the above mentioned ratio, for the preparation of edulcorating compositions able to reduce the glycemic and/or insulin peak due to the swallowing of monosaccharides and/or disaccharides in an amount equal or equivalent to that contained in the edulcorating composition according to the invention, as clearly showed in the following example, and which has to be considered as illustrative and not limiting of the same.

### Example

A edulcorating composition having the following quali-quantitative composition to 12 health volunteers has been administered (T treatment):

| | |
|---|---|
| saccharose | 60 grams |
| inulin | 12 grams |
| glucomannano(flour of Kanjac) | 2.25 grams |
| microcrystalline cellulose | 0.75 grams |

To the same volunteers 60 grams of saccharose (R treatment) have been administered.

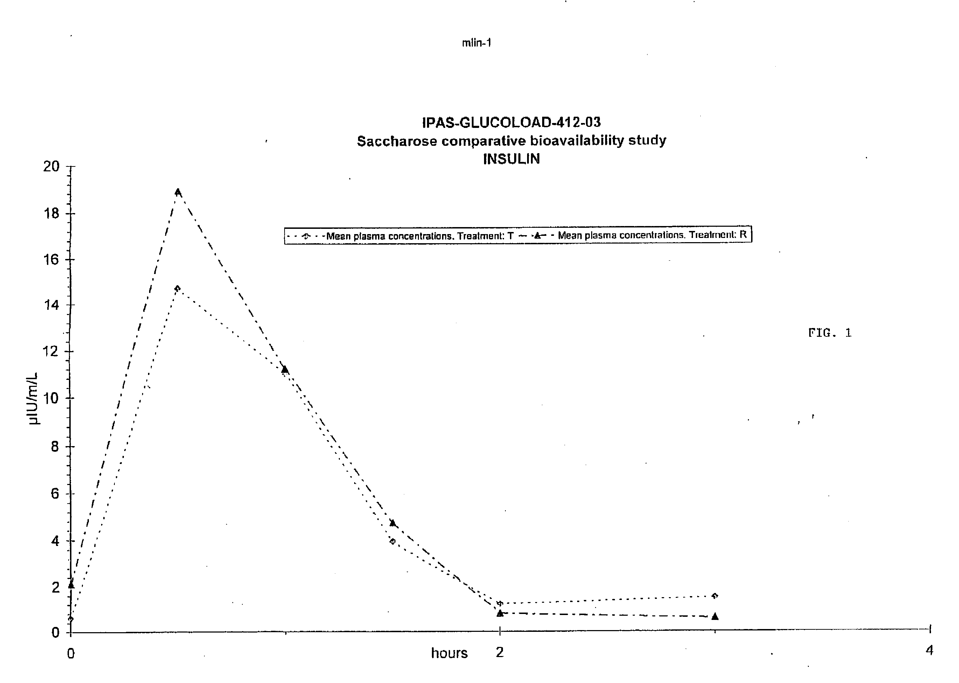

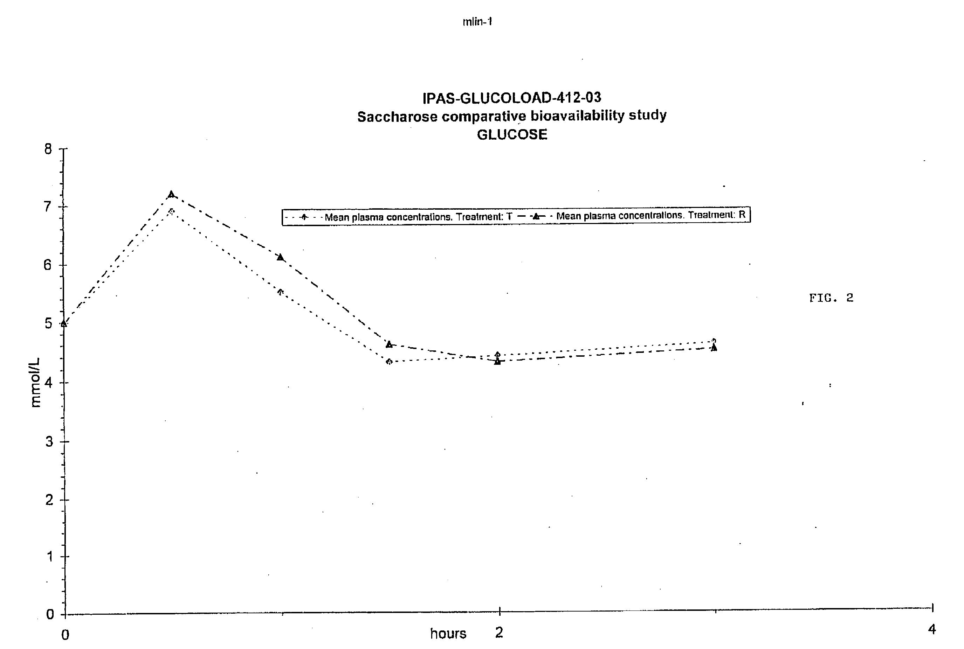

The plasmatic concentration of inulin and glucose due to the aforesaid administrations are shown in Figure 1 and 2, respectively.

## Claims

1. Edulcorating composition containing 5 to 20% by weight of inulin or fructo oligosaccharides, 3 to 10% by weight of jellying fibre, 0.5 to 5% by weight of cellulose and 60 to 92.5 by weight of monosaccharides or disaccharides with respect to the whole weight of the composition.

2. Edulcorating composition according to claim 1 **characterised in that** said jellying fibre is selected from glucomannan, guar gum, karaya gum or pectin.

3. Edulcorating composition according to claim 1, **characterised in that** such monosaccharides are selected from fructose and/or dextrose.

4. Edulcorating composition according to claim 1. **characterised in that** such disaccharides are selected from saccharose, lactose and/or maltose.

5. Edulcorating composition according to claim 1, **characterised in that** the cellulose is in microcrystalline form.

6. Edulcorating composition according to any preceding claims, **characterised in that** it contains 7 to 18% by weight of inulin or fructo oligosaccharides.

7. Edulcorating composition according to any preceding claims, **characterised in that** it contains 10 to 16% by weight of inulin or fructo ligosaccharides.

8. Edulcorating composition according to any preceding claims, **characterised in that** it contains about 15% by weight of inulin or fructo ligosaccharides.

9. Edulcorating composition according to any preceding claims, **characterised in that** it contains 3.5% to 8% by weight of jellying fibres.

10. Edulcorating composition according to any preceding claims, **characterised in that** it contains about 4% by weight of jellying fibres.

11. Edulcorating composition according to any preceding claims, **characterised in that** it contains 0.8 to 3% by weight of cellulose.

12. Edulcorating composition according to any preceding claims, **characterised in that** it contains about 1% by weight of cellulose.

13. Edulcorating composition according to any preceding claims, **characterised in that** it contains 70 to 90% by weight of monosaccharides or disaccharides.

14. Edulcorating composition according to any preceding claims, **characterised in that** it contains 75 to 85% by weight of monosaccharides or disaccharides.

15. Edulcorating composition according to any preceding claims, **characterised in that** it contains about 80% by weight of monosaccharides or disaccharides.

16. Edulcorating composition according to any preceding claims, **characterised in that** it contains about 15% by weight of inulin of fructo oligosaccharides, about 4% by weight of jellying fibres, about 1% by weight of cellulose and about 80% by weight of monosaccharides or disaccharides.

17. Use of inulin or fruit-oligosaccharides, jellying fibre, cellulose and monosaccharides or disaccharides, in the weight proportions according to claims 1-16, for the manufacture of edulcorating compositions reducing the glycemic peak due to the swallowing of monosaccharides and/or disaccharides.

18. Use of inulin or fructo oligosaccharides, jellying fibre, cellulose and monosaccharides or disaccharides, in the weight proportions according to claims 1-16, for the manufacture of edulcorating compositions reducing the insulin peak due to the swallowing of monosaccharides and/or disaccharides.

## Patentansprüche

1. Süßungsmittelzusammensetzung, die 5 bis 20 Gew.% Inulin oder Fructo-Oligosaccharide, 3 bis 10 Gew.% gelierende Fasern, 0,5 bis 5 Gew.% Cellulose und 60 bis 92,5 Gew.% Monosaccharide oder Disaccharide, bezogen auf das Gesamtgewicht der Zusammensetzung, enthält.

2. Süßungsmittelzusammensetzung gemäß Anspruch 1, **dadurch gekennzeichnet, dass** die gelierenden Fasern aus Glucomannan, Guar-Gummi, Karaya-Gummi oder Pectin ausgewählt sind.

3. Süßungsmittelzusammensetzung gemäß Anspruch 1, **dadurch gekennzeichnet, dass** die Monosaccharide aus Fructose und/oder Dextrose ausgewählt sind.

4. Süßungsmittelzusammensetzung gemäß Anspruch 1, **dadurch gekennzeichnet, dass** die Disaccharide aus Saccharose, Laktose und/oder Maltose ausgewählt sind.

5. Süßungsmittelzusammensetzung gemäß Anspruch 1, **dadurch gekennzeichnet, dass** die Cellulose in mikrokristalliner Form vorliegt.

6. Süßungsmittelzusammensetzung gemäß mindestens einem der vorhergehenden Ansprüche, **dadurch gekennzeichnet, dass** sie 7 bis 18 Gew.% Inulin oder Fructo-Oligosaccharide enthält.

7. Süßungsmittelzusammensetzung gemäß mindestens einem der vorhergehenden Ansprüche, **dadurch gekennzeichnet, dass** sie 10 bis 16 Gew.% Inulin oder Fructo-Oligosaccharide enthält.

8. Süßungsmittelzusammensetzung gemäß mindestens einem der vorhergehenden Ansprüche, **dadurch gekennzeichnet, dass** sie etwa 15 Gew.% Inulin oder Fructo-Oligosaccharide enthält.

9. Süßungsmittelzusammensetzung gemäß mindestens einem der vorhergehenden Ansprüche, **dadurch gekennzeichnet**, das sie 3,5 bis 8 Gew. % gelierende Fasern enthält.

10. Süßungsmittelzusammensetzung gemäß mindestens einem der vorhergehenden Ansprüche, **dadurch gekennzeichnet, dass** sie etwa 4 Gew. % gelierender Fasern enthält.

11. Süßungsmittelzusammensetzung gemäß mindestens einem der vorhergehenden Ansprüche, **dadurch gekennzeichnet, dass** sie 0,8 bis 3 Gew.% Cellulose enthält.

12. Süßungsmittelzusammensetzung gemäß mindestens einem der vorhergehenden Ansprüche, **dadurch gekennzeichnet, dass** sie etwa 1 Gew.% Cellulose enthält.

13. Süßungsmittelzusammensetzung gemäß mindestens einem der vorhergehenden Ansprüche, **dadurch gekennzeichnet, dass** sie 70 bis 90 Gew.% Monosaccharide oder Disaccharide enthält.

14. Süßungsmittelzusammensetzung gemäß mindestens einem der vorhergehenden Ansprüche, **dadurch gekennzeichnet, dass** sie 75 bis 85 Gew.% Monosaccharide oder Disaccharide enthält.

15. Süßungsmittelzusammensetzung gemäß mindestens einem der vorhergehenden Ansprüche, **dadurch gekennzeichnet, dass** sie etwa 80 Gew.% Monosaccharide oder Disaccharide enthält.

16. Süßungsmittelzusammensetzung gemäß mindestens einem der vorhergehenden Ansprüche, **dadurch gekennzeichnet, dass** sie etwa 15 Gew. % Inulin oder Fructo-Oligosaccharide, etwa 4 Gew.% gelierende Fasern, etwa 1 Gew.% Cellulose und etwa 80 Gew.% Monosaccharide oder Disaccharide enthält.

17. Verwendung von Inulin oder Fructo-Oligosacchariden, gelierender Fasern, Cellulose und Monosacchariden oder Disacchariden in den Gewichtsverhältnissen gemäß den Ansprüchen 1 bis 16 zur Herstellung von Süßungsmittelzusammensetzungen, die den glykämischen Peak in Folge des Schluckens von Monosacchariden und/oder Disacchariden reduzieren.

18. Verwendung von Inulin oder Fructo-Oligosacchariden, gelierender Fasern, Cellulose und Monosacchariden oder Disacchariden in den Gewichtsverhältnissen gemäß den Ansprüchen 1 bis 16 zur Herstellung von Süßungsmittelzusammensetzungen, die den Insulin-Peak in Folge des Schluckens von Monosacchariden und/oder Disacchariden reduzieren.

## Revendications

1. Composition édulcorante contenant 5 à 20 % en poids d'inuline ou de fructo-oligosaccharides, 3 à 10% en poids de fibre gélifiante, 0,5 à 5 % en poids de cellulose et 60 à 92,5 % en poids de monosaccharides ou de disaccharides par rapport au poids total de la composition.

2. Composition édulcorante selon la revendication 1, **caractérisée en ce que** ladite fibre gélifiante est sélectionnée parmi le glucomannane, la gomme de guar, la gomme karaya ou la pectine.

3. Composition édulcorante selon la revendication 1, **caractérisée en ce que** de tels monosaccharides sont sélectionnés parmi le fructose et/ou le dextrose.

4. Composition édulcorante selon la revendication 1, **caractérisée en ce que** de tels disaccharides sont sélectionnés parmi le saccharose, le lactose et/ou le maltose.

5. Composition édulcorante selon la revendication 1, **caractérisée en ce que** la cellulose est sous une forme microcristalline.

6. Composition édulcorante selon l'une quelconque des revendications précédentes, **caractérisée en ce qu'**elle contient 7 à 18 % en poids d'inuline ou de fructo-oligosaccharides.

7. Composition édulcorante selon l'une quelconque des revendications précédentes, **caractérisée en ce qu'**elle contient 10 à 16 % en poids d'inuline ou de fructo-oligosaccharides.

8. Composition édulcorante selon l'une quelconque des revendications précédentes, **caractérisée en ce qu'**elle contient environ 15 % en poids d'inuline ou de fructo-oligosaccharides.

9. Composition édulcorante selon l'une quelconque des revendications précédentes, **caractérisée en ce qu'**elle contient 3,5 % à 8 % en poids de fibres gélifiantes.

10. Composition édulcorante selon l'une quelconque des revendications précédentes, **caractérisée en ce qu'**elle contient environ 4 % en poids de fibres gélifiantes.

11. Composition édulcorante selon l'une quelconque des revendications précédentes, **caractérisée en ce qu'**elle contient 0,8 à 3 % en poids de cellulose.

12. Composition édulcorante selon l'une quelconque des revendications précédentes, **caractérisée en ce qu'**elle contient environ 1 % en poids de cellulose.

13. Composition édulcorante selon l'une quelconque des revendications précédentes, **caractérisée en ce qu'**elle contient 70 à 90 % en poids de monosaccharides ou de disaccharides.

14. Composition édulcorante selon l'une quelconque des revendications précédentes, **caractérisée en ce qu'**elle contient 75 à 85 % en poids de monosaccharides ou de disaccharides.

15. Composition édulcorante selon l'une quelconque des revendications précédentes, **caractérisée en ce qu'**elle contient environ 80 % en poids de monosaccharides ou de disaccharides.

16. Composition édulcorante selon l'une quelconque des revendications précédentes, **caractérisée en ce qu'**elle contient environ 15 % en poids d'inuline ou de fructo-oligosaccharides, environ 4 % en poids de fibres gélifiantes, environ 1 % en poids de cellulose et environ 80 % en poids de monosaccharides ou de disaccharides.

17. Utilisation d'inuline ou de fructo-oligosaccharides, de fibre gélifiante, de cellulose et de monosaccharides ou de disaccharides, dans les proportions en poids selon les revendications 1-16, pour la fabrication de compositions édulcorantes réduisant le pic glycémique dû à l'ingestion de monosaccharides et/ou de disaccharides.

18. Utilisation d'inuline ou de fructo-oligosaccharides, de fibre gélifiante, de cellulose et de monosaccharides ou de disaccharides, dans les proportions en poids selon les revendications 1-16, pour la fabrication de compositions édulcorantes réduisant le pic d'insuline du à l'ingestion de monosaccharides et/ou de disaccharides.
